# EUROPÄISCHE PATENTSCHRIFT

(11) **EP 2 574 824 B1**
(45) Veröffentlichungstag und Bekanntmachung des Hinweises auf die Patenterteilung: **25.06.2014**
(21) Anmeldenummer: 11183304.2
(22) Anmeldetag: 29.09.2011
(51) Int. Cl.: F16H 1/20, F16H 57/04, F16H 57/022, F16H 57/023, F16H 57/031, F16H 57/038, F16C 25/06, F16C 35/063, F16C 35/067

(54) **Industriegetriebe**
Industrial transmission
Engrenage industriel

(43) Veröffentlichungstag der Anmeldung: 03.04.2013
(73) Patentinhaber: Siemens Aktiengesellschaft, 80333 München (DE)
(72) Erfinder: Schnurr, Wolfgang, 72147 Nehren (DE); Allgaier, Peter, 72144 Dusslingen (DE)

(56) Entgegenhaltungen:
- EP-A1- 1 787 845
- WO-A1-94/10482
- DE-A1- 10 252 192
- JP-A- 2002 213 582
- US-A- 1 492 380
- US-A1- 2006 089 226
- US-A1- 2010 307 270

## Beschreibung

Getrieben für industrielle Anwendungen oder Windkraftanlagen, insbesondere Planetengetrieben, kommt in industriellen Verarbeitungs- und Fertigungsprozessen vielfach eine zentrale Bedeutung zu. An Industrie- oder Windkraftanlagengetriebe wird eine breite Palette von komplexen Anforderungen gestellt. Beispielsweise ist eine dieser Anforderungen eine zuverlässige Funktion, die über eine lange Nutzungsdauer bei minimalem Wartungsaufwand zu gewährleisten ist. Industrielle Verarbeitungs- und Fertigungsprozesse oder Energieerzeugungsprozesse beeinträchtigende Anlagenausfälle können teuer werden, beispielsweise aufgrund kostspieliger Stillstandszeiten. Zur Überwachung und Sicherstellung einer zuverlässigen Funktion sind in Getrieben mitunter zahlreiche Sensoren oder Aktoren an rotierenden Bauteilen installiert.

Aus EP 1 961 993 A1 ist ein Kegelstirnradgetriebe bekannt, bei dem ein Getriebegehäuse eine oder mehrere Getriebestufen umschließt und zum Anschluß an einen Elektromotor eine Motorlaterne vorgesehen ist. Die Motorlaterne ist über einen Laternenflansch mit dem Getriebegehäuse und dem Elektromotor verbunden. Dabei ist eine antriebsseitige Welle einer Kegelradstufe in einer Flanschbuchse gelagert. Der Laternenflansch und eine antriebsseitige Stirnwand des Getriebegehäuses weisen eine gemeinsame Bohrung auf. Diese gemeinsame Bohrung umschließt die Flanschbuchse der antriebsseitigen Welle. Die Flanschbuchse weist eine zylindrische Außenfläche auf, die das Getriebegehäuse, den Laternenflansch und die Flanschbuchse zueinander zentriert. Die Flanschbuchse, der Laternenflansch und die antriebsseitige Stirnwand sind durch Schrauben miteinander verbunden.

In DE 1 000 654 A ist eine Lagerung einer Kegelritzelwelle eines Kegelradgetriebes in einer Lagerbuchse beschrieben, bei der die Lagerbuchse in eine lange einteilige Gehäusebohrung eingeführt ist. An einem Ende weist die Lagerbuchse einen Flansch auf. Außerdem umschließt die Lagerbuchse die über Wälzlager geführte Kegelritzelwelle und bildet mit weiteren Bauteilen eine Baugruppe, die sich einfach vormontieren läßt. Die Gehäusebohrung erstreckt sich axial über eine gesamte Länge einer zylindrischen äußeren Umfangsfläche der Lagerbuchse. Darüber hinaus richtet die Gehäusebohrung die vormontierbare Baugruppe auf einfache Weise aus und weist eine hohe Steifigkeit auf. Über Paßscheiben zwischen Lagerbuchsenflansch und Getriebegehäuse oder über axial wirkende Verstellmechanismen läßt sich ein erforderliches Tragbild in einem Zahneingriff des Kegelradgetriebes einstellen.

Die EP 1 787 845 A1 offenbart ein Getriebe gemäß dem Oberbegriff des Anspruchs 1.

Der vorliegenden Erfindung liegt die Aufgabe zugrunde, ein Industriegetriebe mit zumindest einer Kegelradstufe zu schaffen, das eine kurze Baulänge sowie eine einfache und schnelle Montage ermöglicht.

Diese Aufgabe wird erfindungsgemäß durch ein Industriegetriebe mit den in Anspruch 1 genannten Merkmalen gelöst. Vorteilhafte Weiterbildungen der vorliegenden Erfindung sind in den abhängigen Ansprüchen angegeben.

Das erfindungsgemäße Industriegetriebe weist eine Kegelradstufe auf, die zumindest ein Kegelrad und ein mit diesem in Eingriff stehendes Kegelritzel umfaßt. Das Kegelrad und das Kegelritzel sind von einem Getriebegehäuse umgeben, das Lagersitze für eine Kegelradwelle und eine Kegelritzelwelle umfaßt. In O-Anordnung sind ein erstes und zweites Kegelritzelwellenlager vorgesehen. Dabei ist das erste Kegelritzelwellenlager an einem dem Kegelritzel zugewandten ersten Ende der Kegelritzelwelle angeordnet, während das zweite Kegelritzelwellenlager an einem vom Kegelritzel abgewandten zweiten Ende der Kegelritzelwelle angeordnet ist. Axial zwischen dem ersten und zweiten Kegelritzelwellenlager ist ein Zahnrad einer antriebsseitigen Stirnradstufe angeordnet, das drehfest mit der Kegelritzelwelle verbunden ist und mit einem Antriebsritzel der Stirnradstufe in Eingriff steht. Das Zahnrad ist durch eine antriebsseitige Gehäuseöffnung in das Getriebegehäuse einführbar. Des weiteren ist ein dem zweiten Kegelritzelwellenlager zugeordneter Lagersitz über die antriebsseitige Gehäuseöffnung zugänglich. Am zweiten Ende der Kegelritzelwelle ist eine Gewindebohrung vorgesehen, die sich koaxial zur Kegelritzelwelle erstreckt. Die Gewindebohrung ist dabei über die antriebsseitige Gehäuseöffnung frei zugänglich. In die Gewindebohrung ist eine Lagereinstellschraube eingeführt, die gegen eine umgebende Gewindescheibe axial verspannt ist. Die Gewindescheibe liegt dabei stirnseitig an einem Lagerinnenring des zweiten Kegelritzelwellenlagers an.

Aus der erfindungsgemäßen Anordnung des Zahnrads der Stirnradstufe zwischen den beiden Kegelritzelwellenlagern resultiert eine kurze Baulänge. Die Kegelritzelwellenlager lassen sich mittels der von der antriebsseitigen Gehäuseöffnung frei zugänglichen Lagereinstellschraube einfach einstellen. Dabei kann über ein Anzugsmoment der Lagereinstellschraube eine Lagerspieleinstellung zuverlässig definiert werden.

Entsprechend einer bevorzugten Weiterbildung der vorliegenden Erfindung liegt ein Lageraußenring des ersten Kegelritzelwellenlagers an seiner vom ersten Ende der Kegelritzelwelle abgewandten Stirnseite am zugeordneten Lagersitz an. In entsprechender Weise kann ein Lageraußenring des zweiten Kegelritzelwellenlagers an seiner vom zweiten Ende der Kegelritzelwelle abgewandten Stirnseite am zugeordneten Lagersitz anliegen. Auf diese Weise können die beiden Kegelritzelwellenlager auf einfache Weise in O-Anordnung montiert werden.

Vorzugsweise liegt ein Lagerinnenring des ersten Kegelritzelwellenlagers an seiner dem ersten Ende der Kegelritzelwelle zugewandten Stirnseite an einer durch die Kegelritzelwelle oder durch das Kegelritzel gebildeten ringförmigen Stützfläche an. Entsprechend einer weiteren Ausgestaltung der vorliegenden Erfindung ist axial zwischen dem Zahnradrad der Stirnradstufe und dem Lagerinnenring des zweiten Kegelritzelwellenlagers ein die Kegelritzelwelle konzentrisch umgebender Distanzring angeordnet, der sowohl am Zahnrad als auch am Lagerinnenring des zweiten Kegelritzelwellenlagers anliegt. Insgesamt ermöglicht dies ein besonders einfache Montage, indem zunächst das Zahnrad, die Distanzscheibe und das zweite Kegelritzelwellenlager durch die antriebsseitige Gehäuseöffnung in das Getriebegehäuse eingeführt und an ihren Montagepositionen fixiert werden. Hierbei kann beispielsweise der Distanzring das Zahnrad nach Einsetzen des zweiten Kegelritzelwellenlagers in den zugeordneten Lagersitz zentrieren. Damit kann eine vormontierte Einheit, welche die Kegelritzelwelle und das auf diese gesteckte erste Kegelritzelwellenlager umfaßt, zur Montage auf einfache Weise durch eine konzentrische Aussparung am Zahnrad und durch das zweite Ritzelwellenlager gesteckt werden.

Ist das Zahnrad der Stirnradstufe auf das zweite Ende der Kegelritzelwelle aufgesteckt, liegt ein dem ersten Ende der Kegelritzelwelle zugewandter Stirnflächenabschnitt des Zahnrads entsprechend einer bevorzugten Ausgestaltung der vorliegenden Erfindung an einer durch die Kegelritzelwelle gebildeten ringförmigen Stützfläche an. Die Stützfläche für das Zahnrad kann beispielsweise durch einen Durchmessersprung der Kegelritzelwelle gebildet sein. In entsprechender Weise kann auch die Stützfläche für den Lagerinnenring des ersten Kegelritzelwellenlagers durch einen Durchmessersprung der Kegelritzelwelle oder durch einen Übergangsbereich zwischen Kegelritzelwelle und Kegelritzel gebildet sein. Somit ergibt sich eine besonders einfache axiale Fixierung für das Zahnrad bzw. das erste Kegelritzelwellenlager.

Die vorliegende Erfindung wird nachfolgend an einem Ausführungsbeispiel anhand der Zeichnung näher erläutert. Es zeigt
- Figur 1: eine Längsschnittdarstellung eines Getriebes mit einer Kegelradstufe und zwei Stirnradstufen,
- Figur 2: einen Ausschnitt des in Figur 1 dargestellten Getriebes in einem Bereich einer antriebsseitigen Stirnradstufe.

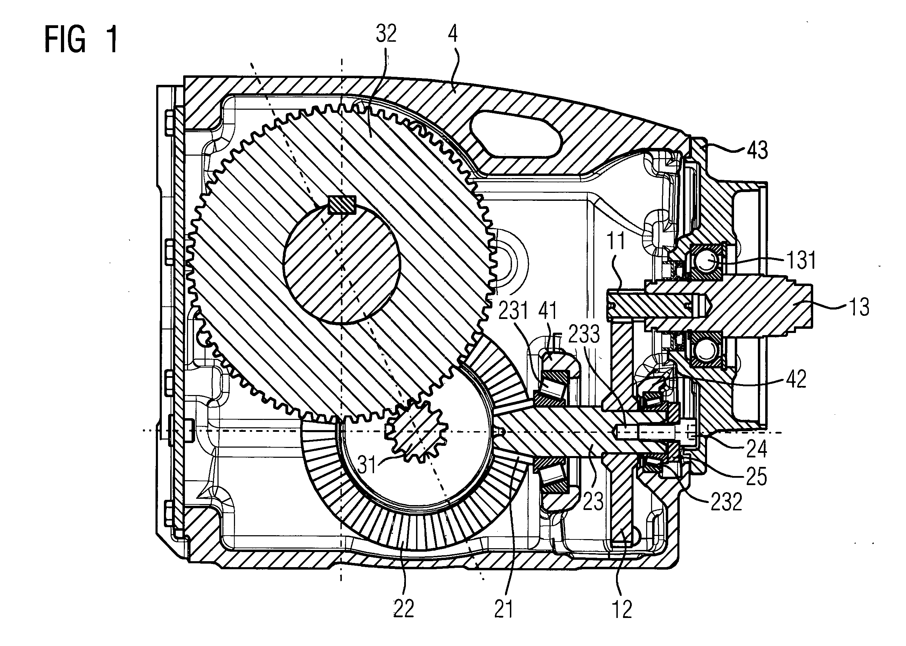

Das in Figur 1 dargestellte Getriebe umfaßt ein Getriebegehäuse 4, in dem eine antriebsseitige Stirnradstufe, eine Kegelradstufe und eine abtriebsseitige Stirnradstufe angeordnet sind. Die antriebsseitige Stirnradstufe umfaßt ein Antriebsritzel 11 und ein mit diesem kämmendes Zahnrad 12, das mit einer Kegelritzelwelle 23 der Kegelradstufe drehfest verbunden ist. Eine antriebsseitige Gehäuseöffnung ist durch einen Gehäusedeckel 43 verschlossen, der Lagersitze für ein Lager 131 einer mit dem Antriebsritzel 11 drehfest verbundene Welle 13 bildet. Die Kegelradstufe umfaßt ein Kegelrad 22 und ein mit diesem in Eingriff stehendes Kegelritzel 21, das mit der Kegelritzelwelle 23 drehfest verbunden oder an diese angeformt ist.

Das Getriebegehäuse 4 bildet neben Lagersitzen für eine mit dem Kegelrad 22 drehfest verbundene Kegelradwelle auch Lagersitze 41, 42 für die Kegelritzelwelle 23, die mittels eines ersten 231 und zweiten Kegelritzelwellenlagers 232 in 0-Anordnung gelagert ist. Die Kegelradwelle ist drehfest mit einem Ritzel 31 der abtriebsseitigen Stirnradstufe verbunden. Das Ritzel 31 der abtriebsseitigen Stirnradstufe steht mit einem Zahnrad 32 in Eingriff, das drehfest mit einer Abtriebswelle verbunden ist. Die Lagersitze 41, 42 für die Kegelritzelwellenlager 231, 232 sind im vorliegenden Ausführungsbeispiel durch jeweils eine Gehäusewand gebildet. Das erste Kegelritzelwellenlager 231 ist an einem dem Kegelritzel 21 zugewandten ersten Ende der Kegelritzelwelle 23 angeordnet, während das zweite Kegelritzelwellenlager 232 an einem vom Kegelritzel 21 abgewandten zweiten Ende der Kegelritzelwelle 23 angeordnet ist.

Das Zahnrad 12 der antriebsseitigen Stirnradstufe ist axial zwischen dem ersten und zweiten Kegelritzelwellenlager 231, 232 angeordnet und ist durch die antriebsseitige Gehäuseöffnung in das Getriebegehäuse 4 einführbar. Der dem zweiten Kegelritzelwellenlager 232 zugeordnete Lagersitz 42 ist ebenfalls über die antriebsseitige Gehäuseöffnung zugänglich. In montiertem Zustand ist das Zahnrad 12 der Stirnradstufe auf das zweite Ende der Kegelritzelwelle 23 aufgesteckt, und ein dem ersten Ende der Kegelritzelwelle 23 zugewandter Stirnflächenabschnitt des Zahnrads 12 liegt an einer durch die Kegelritzelwelle 23 gebildeten ringförmigen Stützfläche an. Die Stützfläche für das Zahnrad 12 ist im vorliegenden Ausführungsbeispiel durch einen Durchmessersprung der Kegelritzelwelle 23 gebildet.

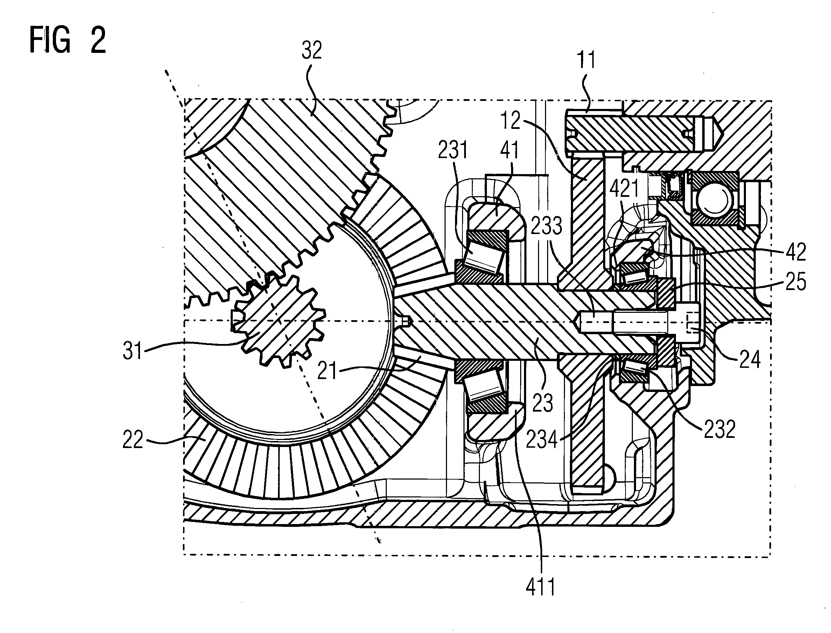

Anhand von Figur 2 ist im Detail zu erkennen, daß axial zwischen dem Zahnradrad 12 der Stirnradstufe und einem Lagerinnenring des zweiten Kegelritzelwellenlagers 232 ein die Kegelritzelwelle 23 konzentrisch umgebender Distanzring 234 angeordnet ist. Der Distanzring 234 liegt dabei stirnseitig sowohl am Zahnrad 12 als auch am Lagerinnenring des zweiten Kegelritzelwellenlagers 232 an. Darüber hinaus ist am zweiten Ende der Kegelritzelwelle 23 eine Gewindebohrung 233 vorgesehen, die sich koaxial zur Kegelritzelwelle 23 erstreckt. Die Gewindebohrung 233 ist über die antriebsseitige Gehäuseöffnung frei zugänglich. In die Gewindebohrung ist eine Lagereinstellschraube 24 eingeführt, die gegen eine umgebende Gewindescheibe 25 axial verspannt ist. Die Gewindescheibe 25 liegt dabei stirnseitig am Lagerinnenring des zweiten Kegelritzelwellenlagers 232 an. Im vorliegenden Ausführungsbeispiel ist die in die Gewindebohrung 233 eingeführte Lagereinstellschraube 24 als Innen- oder Außensechskantschraube ausgestaltet, während die Gewindescheibe 25 als Außensechskantscheibe ausgestaltet ist.

Entsprechend Figur 1 und 2 liegt ein Lageraußenring des ersten Kegelritzelwellenlagers 231 an seiner vom ersten Ende der Kegelritzelwelle 23 abgewandten Stirnseite am zugeordneten Lagersitz 41 an. Der Lagersitz 41 des ersten Kegelritzelwellenlagers 231 umfaßt einen Stützring 411, der an der vom ersten Ende der Kegelritzelwelle 23 abgewandten Stirnseite des ersten Kegelritzelwellenlagers 231 anliegt. An den Stützring 411 des ersten Kegelritzelwellenlagers 231 kann innen zusätzlich eine Schmierstoffstaukante angeformt sein.

Ein Lagerinnenring des ersten Kegelritzelwellenlagers 231 liegt an seiner dem ersten Ende der Kegelritzelwelle 23 zugewandten Stirnseite an einer durch das Kegelritzel 21 gebildeten ringförmigen Stützfläche an. Dabei ist die Stützfläche durch einen Übergangsbereich zwischen Kegelritzelwelle 23 und Kegelritzel 21 gebildet. Alternativ dazu kann die Stützfläche auch durch einen Durchmessersprung der Kegelritzelwelle 23 gebildet sein.

Ein Lageraußenring des zweiten Kegelritzelwellenlagers 232 liegt im vorliegenden Ausführungsbeispiel an seiner vom zweiten Ende der Kegelritzelwelle 23 abgewandten Stirnseite am zugeordneten Lagersitz 42 an. Der Lagersitz 42 des zweiten Kegelritzelwellenlagers 232 umfaßt einen Stützring 421, der an der vom zweiten Ende der Kegelritzelwelle 23 abgewandten Stirnseite des zweiten Kegelritzelwellenlagers 232 anliegt. An diesem Stützring 421 kann innen zusätzlich noch eine Schmierstoffstaukante angeformt sein.

Im vorliegenden Ausführungsbeispiel weist zumindest die antriebsseitige Stirnradstufe eine Tauchschmierung auf, für die an einem Gehäuseboden eine Ölwanne gebildet ist, innerhalb der ein Teil des Zahnrads 12 angeordnet ist. Zusätzlich sind an den Lagersitzen der Kegelritzelwellenlager Ölleitstege zur Zurückführung von Spritzöl in das jeweiliges Kegelritzelwellenlager angeformt. Insbesondere der Gehäusedeckel 43 und ein unterer Steg am Lagersitz 42 des zweiten Kegelritzelwellenlagers 232 bewirken eine Aufsammelung und Zurückführung von Spritzöl ins zweite Kegelritzelwellenlager 232.

Die Anwendung der vorliegenden Erfindung ist nicht auf das vorliegende Ausführungsbeispiel beschränkt.

## Patentansprüche

1. Getriebe mit
- einer Kegelradstufe, die zumindest ein Kegelrad (22) und ein mit diesem in Eingriff stehendes Kegelritzel (21) umfaßt,
- einem das Kegelrad (22) und das Kegelritzel (21) umgebenden Getriebegehäuse (4), das Lagersitze (41, 42) für eine Kegelradwelle und eine Kegelritzelwelle (23) umfaßt,
- einem ersten und zweiten Kegelritzelwellenlager (231, 232) in O-Anordnung, wobei das erste Kegelritzelwellenlager (231) an einem dem Kegelritzel (21) zugewandten ersten Ende der Kegelritzelwelle (23) angeordnet ist, und wobei das zweite Kegelritzelwellenlager (232) an einem vom Kegelritzel (21) abgewandten zweiten Ende der Kegelritzelwelle (23) angeordnet ist, und
- einem axial zwischen dem ersten und zweiten Kegelritzelwellenlager (231, 232) angeordneten Zahnrad (12) einer antriebsseitigen Stirnradstufe, das drehfest mit der Kegelritzelwelle (23) verbunden ist und mit einem Antriebsritzel (11) der Stirnradstufe in Eingriff steht, wobei das Zahnrad (12) durch eine antriebsseitige Gehäuseöffnung in das Getriebegehäuse (4) einführbar ist, und wobei ein dem zweiten Kegelritzelwellenlager (232) zugeordneter Lagersitz (42) über die antriebsseitige Gehäuseöffnung zugänglich ist,
**dadurch gekennzeichnet, dass** das Getriebe ein Industriegetriebe ist, mit
- einer am zweiten Ende der Kegelritzelwelle (23) vorgesehenen Gewindebohrung (233), die sich koaxial zur Kegelritzelwelle (23) erstreckt, wobei die Gewindebohrung (233) über die antriebsseitige Gehäuseöffnung frei zugänglich ist, und
- einer in die Gewindebohrung (233) eingeführten Lagereinstellschraube (24), die gegen eine umgebende Gewindescheibe (25) axial verspannt ist, die stirnseitig an einem Lagerinnenring des zweiten Kegelritzelwellenlagers (232) anliegt.

2. Industriegetriebe nach Anspruch 1,
bei dem ein Lageraußenring des ersten Kegelritzelwellenlagers (231) an seiner vom ersten Ende der Kegelritzelwelle (23) abgewandten Stirnseite an einem zugeordneten Lagersitz (41) anliegt.

3. Industriegetriebe nach Anspruch 2,
bei dem der Lagersitz (41) des ersten Kegelritzelwellenlagers (231) einen Stützring (411) umfaßt, der an der vom ersten Ende der Kegelritzelwelle (23) abgewandten Stirnseite des ersten Kegelritzelwellenlagers (231) anliegt.

4. Industriegetriebe nach Anspruch 3,
bei dem an den Stützring (411) des ersten Kegelritzelwellenlagers (231) innen eine Schmierstoffstaukante angeformt ist.

5. Industriegetriebe nach einem der Ansprüche 2 bis 4,
bei dem ein Lagerinnenring des ersten Kegelritzelwellenlagers (231) an seiner dem ersten Ende der Kegelritzelwelle (23) zugewandten Stirnseite an einer durch die Kegelritzelwelle (23) oder durch das Kegelritzel (21) gebildeten ringförmigen Stützfläche anliegt.

6. Industriegetriebe nach Anspruch 5,
bei dem die Stützfläche für das erste Kegelritzelwellenlager (231) durch einen Durchmessersprung der Kegelritzelwelle (23) oder durch einen Übergangsbereich zwischen Kegelritzelwelle (23) und Kegelritzel (21) gebildet ist.

7. Industriegetriebe nach einem der Ansprüche 1 bis 6,
bei dem ein Lageraußenring des zweiten Kegelritzelwellenlagers (232) an seiner vom zweiten Ende der Kegelritzelwelle (23) abgewandten Stirnseite am zugeordneten Lagersitz (42) anliegt.

8. Industriegetriebe nach Anspruch 7,
bei dem der Lagersitz (42) des zweiten Kegelritzelwellenlagers (232) einen Stützring (421) umfaßt, der an der vom zweiten Ende der Kegelritzelwelle (23) abgewandten Stirnseite des zweiten Kegelritzelwellenlagers (232) anliegt.

9. Industriegetriebe nach Anspruch 8,
bei dem an den Stützring (421) des zweiten Kegelritzelwellenlagers (232) innen eine Schmierstoffstaukante angeformt ist.

10. Industriegetriebe nach einem der Ansprüche 1 bis 9,
bei dem das Zahnrad (12) der Stirnradstufe auf das zweite Ende der Kegelritzelwelle (23) aufgesteckt ist, und bei dem ein dem ersten Ende der Kegelritzelwelle (23) zugewandter Stirnflächenabschnitt des Zahnrads (12) an einer durch die Kegelritzelwelle (23) gebildeten ringförmigen Stützfläche anliegt.

11. Industriegetriebe nach Anspruch 10,
bei dem die Stützfläche für das Zahnrad (12) durch einen Durchmessersprung der Kegelritzelwelle (23) gebildet ist.

12. Industriegetriebe nach einem der Ansprüche 1 bis 11,
bei dem axial zwischen dem Zahnrad (12) der Stirnradstufe und dem Lagerinnenring des zweiten Kegelritzelwellenlagers (232) ein die Kegelritzelwelle (23) konzentrisch umgebender Distanzring (234) angeordnet ist, der sowohl am Zahnrad (12) als auch am Lagerinnenring des zweiten Kegelritzelwellenlagers (232) anliegt.

13. Industriegetriebe nach einem der Ansprüche 1 bis 12,
bei dem die in die Gewindebohrung (233) eingeführte Lagereinstellschraube (24) als Innen- oder Außensechskantschraube ausgestaltet ist, und bei dem die Gewindescheibe (25) als Auβensechskantscheibe ausgestaltet ist.

14. Industriegetriebe nach einem der Ansprüche 1 bis 13,
bei dem zumindest die Stirnradstufe eine Tauchschmierung aufweist, für die an einem Gehäuseboden eine Ölwanne gebildet ist, innerhalb der ein Teil des Zahnrads angeordnet ist, und bei dem an zumindest einen Lagersitz eines der Kegelritzelwellenlager ein Ölleitsteg zur Zurückführung von Spritzöl in das jeweilige Kegelritzelwellenlager angeformt ist.

15. Industriegetriebe nach einem der Ansprüche 1 bis 14,
bei dem die Lagersitze (41, 42) für die Kegelritzelwellenlager (231, 232) durch jeweils eine Gehäusewand gebildet sind.

16. Industriegetriebe nach einem der Ansprüche 1 bis 15,
bei dem die antriebsseitige Gehäuseöffnung durch einen Gehäusedeckel (43) verschlossen ist, der Lagersitze für eine mit dem Antriebsritzel (11) drehfest verbundene Welle (13) bildet.

17. Industriegetriebe nach einem der Ansprüche 1 bis 16,
bei dem der Kegelradstufe eine abtriebsseitige Stirnradstufe nachgeordnet ist.

## Claims

1. Industrial gearing with
- a bevel gear stage, which comprises at least one bevel gear (22) and a bevel pinion (21) engaging with said gear,
- a gearing housing (4) surrounding the bevel gear (22) and the bevel pinion (21), which includes bearing seats (41, 42) for a bevel gear shaft and a bevel pinion shaft (23),
- a first and a second bevel pinion shaft bearing (231, 232) in an 0-type arrangement, wherein the first bevel pinion shaft bearing (231) is disposed at a first end of the bevel pinion shaft (23) facing towards the bevel pinion (21) and the second bevel pinion shaft bearing (231) is disposed at a second end of the bevel pinion shaft (23) facing away from the bevel pinion (21),
- a toothed wheel (12) of a drive-side spur gear stage disposed axially between the first and the second bevel pinion shaft bearing (231, 232), which is connected rotationally conjointly with the bevel pinion shaft (23) and engages with a drive pinion (11) of the spur gear stage, wherein the toothed wheel (12) is able to be introduced into the drive housing (4) through a drive-side housing element, and wherein a bearing seat (42) assigned to the second bevel pinion shaft bearing (232) is accessible via the drive-side housing opening,
**Characterised in that** the gearing is industrial gearing, with
- a threaded hole (233) provided at the second end of the bevel pinion shaft (23), which extends coaxially to the bevel pinion shaft (23), wherein the threaded hole (233) is freely accessible via the drive-side housing opening,
- a bearing adjustment screw (24) introduced into the threaded hole (233), which is tensioned axially against a surrounding threaded washer (25), which rests with its front side against an inner bearing ring of the second bevel pinion shaft bearing (232).

2. The industrial gearing as claimed in claim 1,
in which an outer bearing ring of the first bevel pinion shaft bearing (231) rests against an assigned bearing seat (41) on its front side facing away from the first end of the bevel pinion shaft (23).

3. The industrial gearing as claimed in claim 2,
in which the bearing seat (41) of the first bevel pinion shaft bearing (231) comprises a support ring (411), which rests against the front side of the first bevel pinion shaft bearing (231) facing away from the first end of the bevel pinion shaft (23) .

4. The industrial gearing as claimed in claim 3,
in which a lubricant catching edge is formed on the inside of the support ring (411) of the first bevel pinion shaft bearing (231) .

5. The industrial gearing as claimed in one of claims 2 to 4,
in which an inner bearing ring of the first bevel pinion shaft bearing (231), on its front side facing towards the first end of the bevel pinion shaft (23), rests against an annular support surface formed by the bevel pinion shaft (23) or by the bevel pinion (21).

6. The industrial gearing as claimed in claim 5,
in which the support surface for the first bevel pinion shaft bearing (231) is formed by a step in the diameter of the bevel pinion shaft (23) or by a transition area between bevel pinion shaft (23) and bevel pinion (21).

7. The industrial gearing as claimed in one of claims 1 to 6, in which an outer bearing ring of the second bevel pinion shaft bearing (232) rests against the assigned bearing seat (42) on its front side facing away from the second end of the bevel pinion shaft (23).

8. The industrial gearing as claimed in claim 7,
in which the bearing seat (42) of the second bevel pinion shaft bearing (232) comprises a support ring (421) which rests against the front side of the bevel pinion shaft bearing (232) facing away from the second end of the bevel pinion shaft (23).

9. The industrial gearing as claimed in claim 8,
in which a lubricant catching edge is formed on the inside of the support ring (421) of the second bevel pinion shaft bearing (232) .

10. The industrial gearing as claimed in one of claims 1 to 9,
in which the toothed wheel (12) of the spur gear stage is put onto the second end of the bevel pinion shaft (23), and for which a front surface section of the toothed wheel (12) facing towards the first end of the bevel pinion shaft (23) rests against an annular support surface formed by the bevel pinion shaft (23).

11. The industrial gearing as claimed in claim 10,
in which the support surface for the toothed wheel (12) is formed by a step in the diameter of the bevel pinion shaft (23).

12. The industrial gearing as claimed in one of claims 1 to 11,
in which a distance ring (234) concentrically surrounding the bevel pinion shaft (23) is disposed axially between the toothed wheel (12) of the spur gear stage and the inner bearing ring of the second bevel pinion shaft bearing (232).

13. The industrial gearing as claimed in one of claims 1 to 12,
in which the bearing adjustment screw (24) introduced into the threaded hole (233) is embodied as a screw with an outer or inner hexagon, and in which the threaded washer (25) is embodied as a washer with an outer hexagon.

14. The industrial gearing as claimed in one of claims 1 to 13,
in which at least the spur gear stage has immersion lubrication, for which an oil sump is formed in a housing base, within which a part of the toothed wheel (12) is disposed, and for which on at least one bearing seat (41, 42) of one of the bevel pinion shaft bearings (231, 232) an oil guidance web for guiding spray oil back into the respective bevel pinion shaft bearing (231, 232) is formed.

15. The industrial gearing as claimed in one of claims 1 to 14,
in which the bearing seats (41, 42) for the bevel pinion shaft bearings (231, 232) are formed by a housing wall in each case.

16. The industrial gearing as claimed in one of claims 1 to 15, in which the drive-side housing opening is closed off by a housing cover (43), which forms bearing seats for a shaft (13) connected rotationally conjointly with the drive pinion (11).

17. The industrial gearing as claimed in one of claims 1 to 16,
in which the bevel gear stage is disposed downstream of a take-off side spur gear stage.

## Revendications

1. Engrenage comprenant
- un étage à roue conique, qui comprend au moins une roue ( 22 ) conique et un pignon ( 21 ) conique en prise avec elle,
- un carter ( 4 ) d'engrenage, qui entoure la roue ( 22 ) conique et le pignon ( 21 ) conique et qui comprend des serrages ( 41, 42 ) de palier pour un arbre de roue conique et pour un arbre ( 23 ) de pignon conique,
- un premier et un deuxième paliers ( 231, 232 ) d'arbre de pignon conique suivant un agencement en 0, dans lequel le premier palier ( 231 ) d'arbre de pignon conique est disposé à un premier bout, tourné vers le pignon ( 21 ) conique, de l'arbre ( 23 ) du pignon conique et dans lequel le deuxième
palier ( 232 ) d'arbre de pignon conique est disposé à un second bout, éloigné du pignon ( 21 ) conique, de l'arbre (23) de pignon conique, et
- une roue ( 12 ) dentée d'un étage de roue droite du côté menant, qui est disposée entre le premier et le deuxième paliers ( 231, 232 ) d'arbre de pignon conique, qui est solidaire en rotation de l'arbre ( 23 ) de pignon conique et qui est en prise avec un pignon ( 11 ) menant de l'étage de roue droite, la roue ( 12 ) dentée pouvant être introduite dans le carter ( 4 ) de l'engrenage par une ouverture du carter du côté menant et dans lequel un serrage ( 42 ) de palier associé au deuxième palier ( 232 ) d'arbre de pignon conique est accessible par l'ouverture du carter du côté menant,
**caractérisé en ce que** l'engrenage est un engrenage industriel, comprenant
- un taraudage ( 233 ) qui est prévu au second bout de l'arbre ( 23 ) de pignon conique et qui s'étend coaxialement à l'arbre ( 23 ) de pignon conique, le taraudage ( 233 ) étant accessible librement par l'ouverture du carter du côté menant, et
- une vis ( 24 ) de réglage de palier, qui est introduite dans le taraudage ( 233 ) et qui est bloquée axialement contre une rondelle ( 25 ) filetée qui l'entoure et qui s'applique du côté frontal à une bague intérieure du deuxième palier ( 232 ) de l'arbre de pignon conique.

2. Engrenage industriel suivant la revendication 1,
dans lequel une bague extérieure du premier palier ( 231 ) d'arbre de pignon conique s'applique à son côté frontal éloigné du premier bout de l'arbre ( 23 ) de pignon conique à un serrage ( 41 ) de palier associé.

3. Engrenage industriel suivant la revendication 2,
dans lequel le serrage ( 41 ) du premier palier ( 231 ) d'arbre de pignon conique comprend une bague ( 411 ) d'appui qui s'applique du côté frontal, éloigné du premier bout de l'arbre ( 23 ) de pignon conique, du premier palier ( 231 ) d'arbre de pignon conique.

4. Engrenage industriel suivant la revendication 3,
dans lequel un bord d'accumulation de lubrifiant est formé à l'intérieur sur la bague ( 411 ) d'appui du premier palier ( 231 ) d'arbre de pignon conique.

5. Engrenage industriel suivant l'une des revendications 2 à 4,
dans lequel une bague intérieure du premier palier ( 231 ) d'arbre de pignon conique s'applique à son côté frontal, tourné vers le premier bout de l'arbre ( 23 ) de pignon conique, à une surface d'appui annulaire formée par l'arbre ( 23 ) de pignon conique ou par le pignon ( 21 ) conique.

6. Engrenage industriel suivant la revendication 5,
dans lequel la surface d'appui pour le premier palier ( 231 ) d'arbre de pignon conique est formée par un saut de diamètre de l'arbre ( 23 ) de pignon conique ou par une partie de transition entre l'arbre ( 23 ) de pignon conique et le pignon ( 21 ) conique.

7. Engrenage industriel suivant l'une des revendications 1 à 6,
dans lequel une bague extérieure du deuxième palier ( 232 ) d'arbre de pignon conique s'applique à son côté frontal, éloigné du second bout de l'arbre ( 23 ) de pignon conique, au serrage ( 42 ) de palier associé.

8. Engrenage industriel suivant la revendication 7,
dans lequel le serrage ( 42 ) du deuxième palier ( 232 ) d'arbre de pignon conique comprend une bague ( 421 ) d'appui qui s'applique au côté frontal, éloigné du second bout de l'arbre ( 23 ) de pignon conique, du deuxième palier ( 232 ) d'arbre de pignon conique.

9. Engrenage industriel suivant la revendication 8,
dans lequel
un bord d'accumulation de lubrifiant est formé à l'intérieur sur la bague ( 421 ) d'appui du deuxième palier ( 232 ) d'arbre de pignon conique.

10. Engrenage industriel suivant l'une des revendications 1 à 9,
dans lequel la roue ( 12 ) dentée de l'étage de roue dentée est emmanchée sur le second bout de l'arbre ( 23 ) de pignon conique, et dans lequel une partie de la surface frontale, tournée ver le premier bout de l'arbre ( 23 ) de pignon conique, de la roue ( 12 ) dentée s'applique à une surface d'appui annulaire formée par l'arbre ( 23 ) de pignon conique.

11. Engrenage industriel suivant la revendication 10,
dans lequel la surface d'appui de la roue ( 12 ) dentée est formée par un saut de diamètre de l'arbre ( 23 ) de pignon conique.

12. Engrenage industriel suivant l'une des revendications 1 à 11,
dans lequel il est monté axialement entre la roue ( 12 ) dentée de l'étage de roue dentée et la bague intérieure du deuxième palier ( 232 ) d'arbre de pignon conique, une bague ( 234 ) d'entretoisement, qui entoure concentriquement l'arbre ( 23 ) de pignon conique et qui s'applique à la fois à la roue ( 12 ) dentée et à la bague intérieure du deuxième palier ( 232 ) d'arbre de pignon conique.

13. Engrenage industriel suivant l'une des revendications 1 à 12,
dans lequel la vis ( 24 ) de réglage de palier introduite dans le taraudage ( 233 ) est conformée en vis à six pans intérieur ou extérieur et dans lequel la rondelle ( 25 ) filetée est conformée en rondelle à six pans extérieurs.

14. Engrenage industriel suivant l'une des revendications 1 à 13,
dans lequel au moins à l'étage de roue frontale a un graissage par barbotage pour lequel il formé sur le fond du carter une cuve d'huile dans laquelle est disposée une partie de la roue dentée et dans lequel il est formé, sur au moins un serrage d'un palier d'arbre de pignon conique, un conduit d'huile pour le retour d'huile de projection dans le palier d'arbre de pignon conique respectif.

15. Engrenage industriel suivant l'une des revendications 1 à 14,
dans lequel les serrages ( 41, 42 ) des paliers ( 231, 232 ) d'arbre de pignon conique sont formés respectivement par une paroi du carter.

16. Engrenage industriel suivant l'une des revendications 1 à 15,
dans lequel l'ouverture du carter du côté menant est fermée un couvercle ( 42 ) de carter qui forme des serrages de palier pour un arbre ( 13 ) solidaire en rotation du pignon ( 11 ) menant.

17. Engrenage industriel suivant l'une des revendications 1 à 16,
dans lequel un étage de roue droite est monté du côté mené en aval de l'étage de roue conique.
